# EUROPÄISCHE PATENTSCHRIFT

(11) **EP 1 870 526 B1**
(45) Veröffentlichungstag und Bekanntmachung des Hinweises auf die Patenterteilung: **06.04.2016**
(21) Anmeldenummer: 06012694.3
(22) Anmeldetag: 21.06.2006
(51) Int. Cl.: E03C 1/04

(54) **Sanitärarmatur**
Sanitary fixture
Robinet sanitaire

(43) Veröffentlichungstag der Anmeldung: 26.12.2007
(73) Patentinhaber: Franke Water Systems AG, 5726 Unterkulm (CH)
(72) Erfinder: Leutwyler, André, 5737 Menziken (CH)
(74) Vertreter: Lemcke, Brommer & Partner Patentanwälte Partnerschaft mbB

(56) Entgegenhaltungen:
- DE-A1- 10 243 304
- FR-A1- 2 684 142
- JP-A- 11 148 155

## Beschreibung

Die vorliegende Erfindung betrifft eine Sanitärarmatur gemäss dem Oberbegriff des Patentanspruchs 1.

JP 11148155 A offenbart eine Sanitärarmatur gemäß dem Oberbegriff von Anspruch 1 mit einem Grundkörper und einem mittels einer Führungsklammer höhenverstellbar am Grundkörper gehaltenen Armaturenteil. Der Grundkörper ist drehfest an einem Waschtisch befestigbar und weist einen Durchlass auf, welcher eine Achse definiert. Der Armaturenteil besteht aus einem Brausenkopf und einem fest damit verbundenen hülsenförmigen Abschnitt, welcher den Durchlass des Grundkörpers durchdringt und am Grundkörper mittels der Führungsklammer um die Achse schwenkbar gelagert ist.

Der Grundkörper ist pilzförmig ausgebildet und über mehrere Teile derart am Waschtisch befestigt, dass sein Pilzkopf auf einer Oberseite des Waschtisches, das heisst auf der Bedienerseite, angeordnet ist. Im Pilzkopf ist eine kreiszylindrische, konzentrisch zur Achse verlaufende Ausnehmung mit einer inneren Schulter und einer darauf angeordneten Verdrehsicherung zur verdrehsicheren Aufnahme und mantelseitigen Stützung der Führungsklammer angeordnet. Die Führungsklammer ist durch eine am Grundkörper befestigte Abschlusskappe axial im Grundkörper fixiert.

Der Armaturenteil ist in axialer Richtung höhenverstellbar und in zwei Höhenpositionen an der Führungsklammer einrastbar. Die Einrastbarkeit wird dadurch erzielt, dass der hülsenförmige Abschnitt in beiden den Höhenpositionen entsprechenden Stellungen je ein Quernutenpaar mit mantelseitigen in Umfangsrichtung verlaufenden Quernuten aufweist, wobei die Quernuten jedes Quernutenpaars einander diametral gegenüberliegend angeordnet sind. Da die kassettenartigen, rechteckförmigen Quernuten den hülsenförmigen Abschnitt nicht durchdringen, ist jede Quernut in Achsrichtung durch zwei in Umfangsrichtung verlaufende und zur Achse geneigte Querflanken und in Umfangsrichtung durch zwei Längsflanken begrenzt.

In einem freien Endabschnitt des hülsenförmigen Abschnitts ist ein radial nach Aussen vorstehender Endanschlag derart befestigt, dass der Armaturenteil axial höchstens so weit aus dem Grundkörper gezogen werden kann, bis der Endanschlag an einer Stirnseite des Grundkörpers anstösst.

Die ringartige, einteilige Führungsklammer weist einen in Umfangsrichtung ein sich geschlossenen Kreiszylinderkörper zur radialen Führung des Armaturenteils und einen innenliegenden Rastabschnitt auf, der dazu bestimmt ist, mit den Quernuten zusammen zu wirken. Dieser Kreiszylinderkörper ist in der Ausnehmung mit der inneren Schulter im Grundkörper fixiert. In einer bezüglich der Achse unteren Hälfte der Führungsklammer sind zwer in Umfangsrichtung verlaufende, lamellenartige Rastabschnitte einander diametral gegenüberliegend angeordnet, welche in Umfangsrichtung jeweils beidseitig derart über ein lamellenartiges Federelement mit dem Kreiszylinderkörper verbunden sind, dass ein nierenförmiger Leerraum gebildet wird.

Die axiale Führung des Armaturenteils erfolgt einerseits durch einander diametral gegenüberliegende, gegenüber den Federelementen um neunzig Grad um die Achse versetzte, radial nach Innen gerichtete Führungsabschnitte der Führungsklammer, welche den hülsenförmige Abschnitt des Armaturenteils segmentartig führend berühren und andererseits durch eine kreisringförmige U-Packung, welche in einer umlaufenden, zwischen dem Kreiszylinderkörper und dem hülsenförmigen Abschnitt des Armaturenteils gebildeten Lücke angeordnet ist, wobei sich ein Schenkel der U-Packung innenseitig am Kreiszylinderkörper abstützt und der andere Schenkel den hülsenförmigen Abschnitt federnd und umgreifend hält und ihn dadurch in der Führungsklammer zentriert.

Wenn axial am hülsenförmigen Abschnitt gezogen wird, drängen die Querflanken der Quernut die Rastabschnitte radial nach Aussen, bis sie bei Erreichen der zweiten Höhenposition selbsttätig wieder in die entsprechenden Quernuten einrasten - sofern die Schwenklage beibehalten wird.

Es ist Aufgabe der vorliegenden Erfindung, eine einfache Montage des Armaturenteils am Grundkörper zu ermöglichen.

Diese Aufgabe wird mit einer erfindungsgemässen Sanitärarmatur gemäss Anspruch 1 gelöst.

Besonders bevorzugte Ausführungsformen sind in den abhängigen Ansprüchen angegeben.

Die Erfindung wird im Folgenden anhand der Zeichnungen näher erläutert. Es zeigen rein schematisch:
- Fig. 1: in Seitenansicht eine Ausführungsform der erfindungsgemässen Sanitärarmatur mit Teilschnitt im Durchführungsbereich;
- Fig. 2: im Längsschnitt und vergrössert den Durchführungsbereich der in Fig.1 gezeigten Ausführungsform;
- Fig. 3: die Sanitärarmatur der in Fig.1 gezeigten Sanitärarmatur in Explosionsdarstellung;
- Fig. 4: eine Unteransicht des in Fig.1 gezeigten Armaturenteils;
- Fig. 5: eine perspektivische Ansicht der in Fig.1 bis 3 gezeigten Führungsklammer;
- Fig. 6: eine Draufsicht der in Fig.5 gezeigten Führungsklammer; und
- Fig. 7: eine Schnittdarstellung der in Fig.6 gezeigten Führungsklammer entlang der Linie VII-VII.

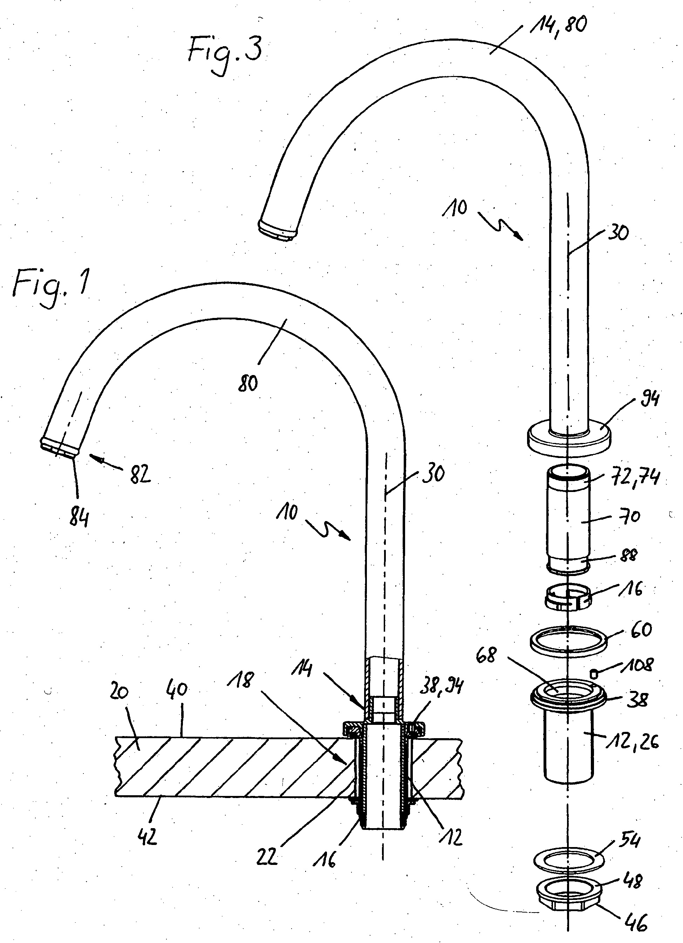

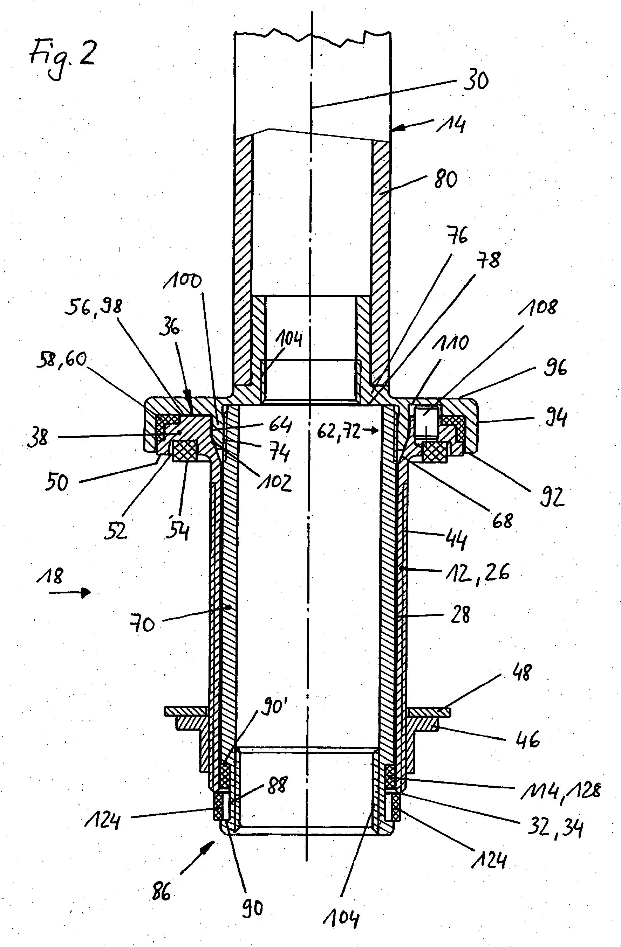

Eine Ausführungsform einer erfindungsgemässen Sanitärarmatur 10, welche einen Grundkörper 12, einen Armaturenteil 14 und eine Führungsklammer 16 umfasst, ist in den Fig. 1 bis 4 gezeigt. Aus Fig. 1 geht hervor, dass die erfindungsgemässe Sanitärarmatur 10, welche in einem Durchführungsbereich 18 an einem Objekt 20 fixiert ist. Die Bezeichnung Objekt 20 soll nachfolgend stellvertretend beispielsweise für eine Einbaukombination, einen Waschtisch, einen Spültisch, einer Wand usw. stehen. Wie der in Fig. 2 vergrössert dargestellte Teilschnitt im Durchführungsbereich 18 zeigt, weist das Objekt 20 eine kreiszylinderförmige Durchführung 22, beispielsweise eine Tischbohrung, mit einem Durchführungsdurchmesser auf. In Fig. 2 ist das Objekt 20 zur Vereinfachung weggelassen worden.

Der Grundkörper 12 mit einem Rohrabschnitt 26 weist zur Aufnahme des Armaturenteils 14 einen kreisrunden Durchlass 28 auf, welcher eine Achse 30 definiert. Eine freie Stirnseite 32 des Rohrabschnitts 26 ist als Gegenschulter 34 ausgebildet, welche im wesentlichen rechtwinklig zur Achse 30 verläuft und dazu bestimmt ist, mit der Führungsklammer 16 zusammen zu wirken. In einem der Gegenschulter 34 gegenüberliegenden Endbereich 36 des Grundkörpers 12 ist ein sich radial nach Aussen erstreckender, umlaufender Grundkörperflansch 38 angeordnet, welcher ebenfalls rechtwinklig zur Achse 30 verläuft.

Der Rohrabschnitt 26 des Grundkörpers 12 ist von der Oberseite 40 des Objekts 20 her derart in die Durchführung 22 hineingeschoben, dass sich der Grundkörperflansch 38, welcher einen Durchmesser hat, der grösser als ein Durchmesser der Durchführung 22 des Objekts ist. Der Grundkörperflansch 38 befindet sich bei der Oberseite 40 des Objekts 20 und der Rohrabschnitt 26 durchgreift die Durchführung 22 des Objekts 20 und steht von dessen Unterseite 42 vor.

Der kreiszylinderförmige Rohrabschnitt 26 des Grundkörpers 12 ist mit einem Aussengewinde 44 versehen, um eine drehfeste Fixierung des Grundkörpers 12 am Objekt 20 mittels einer darauf aufgeschraubten Überwurfmutter 46 zu ermöglichen. Aus Fig. 3 geht hervor, dass eine Unterlegescheibe 48 zwischen der Unterseite 42 des Objekts 20 und der Überwurfmutter 46 angeordnet ist, um Montageungenauigkeiten, beziehungsweise Geometrieunregelmässigkeiten ausgleichen zu können.

Eine gegen die Oberseite 40 des Objekts 20 gewandte Anlagefläche 50 des Grundkörperflansches 38 ist in montiertem Zustand im wesentlichen bündig mit der Oberseite 40 des Objekts 20. In diese Anlagefläche 50 ist eine umlaufende, kreisförmige Nut 52 eingearbeitet, welche dazu dient, einen ebenso geformten Dichtungsring 54 aufzunehmen. Die Tiefe dieser Nut 52 ist derart bemessen, dass der Dichtungsring 54 axial geringfügig über die Anlagefläche 50 vorsteht, um bei der Montage des Grundkörpers 12 am Objekt 20 etwaige Geometrieunregelmässigkeiten wie beispielsweise Unebenheiten ausgleichen zu können und/oder um die Durchführung 22 abzudichten.

In einem radial äusseren Bereich einer Oberseite 56 des Grundkörperflanschs 38 ist eine Aussparung 58 mit einem L-förmigen Querschnitt angeordnet, welche dazu dient, einen ebenso geformten Lagerring 60 aufzunehmen.

Der Grundkörper 12 weist - beabstandet von der Gegenschulter 34 - auf der Höhe des Grundkörperflansches 38 einen an die Oberseite 56 des Grundkörperflanschs 38 grenzenden, innenliegenden Einführungsbereich 62 auf, welcher dazu dient, das Einführen des Armaturenteil 14 mit der vormontierten Führungsklammer 16 zu erleichtern. Dazu weist der Einführungsbereich 62 einen Innenzylinderabschnitt 64 auf, welcher sich von der Oberseite 56 des Grundkörperflansches 38 in Achsrichtung etwa hälftig durch den Grundkörperflansch 38 erstreckt und dessen Innendurchmesser grösser als der Maximaldurchmesser 66 der Führungskammer 16 ist. Anschliessend an den Innenzylinderabschnitt 64 folgt eine kegelförmige, umlaufende Komprimierflanke 68, welche sich in Richtung der Gegenschulter 34 verjüngt.

Wie insbesondere aus Fig. 2 hervorgeht, ist der Armaturenteil 14 im Durchführungsbereich 18 mehrteilig ausgebildet. Ein hülsenförmiger Abschnitt 70, welcher den Durchlass 28 durchgreift, ist in einem Endbereich 72 über eine Gewindeverbindung 74 drehfest und dicht mit einem Armaturenteilkörper 76 verbunden und liegt stirnseitig bündig an einer Innenschulter 78 des Armaturenteilkörpers 76 an. Am konzentrisch zur Achse 30 verlaufenden, kreisringförmigen Armaturenteilkörper 76 ist ein Auslaufrohr 80 drehfest und dicht befestigt, welches an seinem freien Endbereich 82 eine Auslaufmündung 84 aufweist, in der beispielsweise ein Perlator (Marke der NEOPERL-Gruppe) angeordnet sein kann.

In einem freien Endbereich 86 des hülsenförmigen Abschnitts 70 ist eine als umlaufende Ringnut ausgebildete Quernut 88 mit rechteckigem Querschnitt angeordnet, deren Nutflanken 90, 90' im wesentlichen rechtwinklig zur Achse 30 verlaufen. Die Ringnut 88 dient zur axial fixierenden Aufnahme der koaxial zur Achse 30 angeordneten ringartigen Führungs-klammer 16.

In eine Unterseite 92 eines Armaturenteilflansches 94 des Armaturenteilkörpers 76, welche im wesentlichen parallel zu einer Oberseite 96 des Armaturenteilflansches 94 verläuft, ist eine nach unten (Fig. 2) offene, umlaufende Innennut 98 mit einem annähernd rechteckigen Querschnitt geformt. In dieser Innennut 98 ist im montierten Zustand der Grundkörperflansch 38 derart untergebracht, dass der Armaturenteilflansch 94 den Grundkörperflansch 38 wenigstens annähernd bis zu dessen Anlagefläche 50 abdeckt. Die Innennut 98 ist derart im Armaturenteilflansch 94 angeordnet, dass radial Innen ein umlaufender, ringförmiger Anschlusskragen 100 gebildet ist. Der Anschlusskragen 100 weist ein Innengewinde der Gewindeverbindung 74 zum Einschrauben des hülsenförmigen Abschnitts 70, sowie eine umlaufende, konische Aussenschulter 102 auf, welche zur Ringnut 88 hin verjüngt ist und zur Zentrierung während des Montagevorgangs dient.

Im Armaturenteilkörper 76 und im hülsenförmigen Abschnitt 70 sind Innengewinde 104 angeordnet, welche als Anschlussmittel 104 für eine Zuflussleitung (nicht gezeigt) dienen. Damit besteht die Möglichkeit, die Zuflussleitung je nach Bedarf am Armaturenteilkörper 76 oder am hülsenförmigen Abschnitt 70 anzuschliessen.

Der L-förmige Lagerring 60 ist derart in der Aussparung 58 des Grundkörperflansches 38 angeordnet, dass er radial und axial von diesem vorsteht, um mit der umlaufenden Innennut 98 des Armaturenteilflansches 94 so zusammen zu wirken, dass der Armaturenteil 14 radial und axial am Grundkörper 12 gelagert ist.

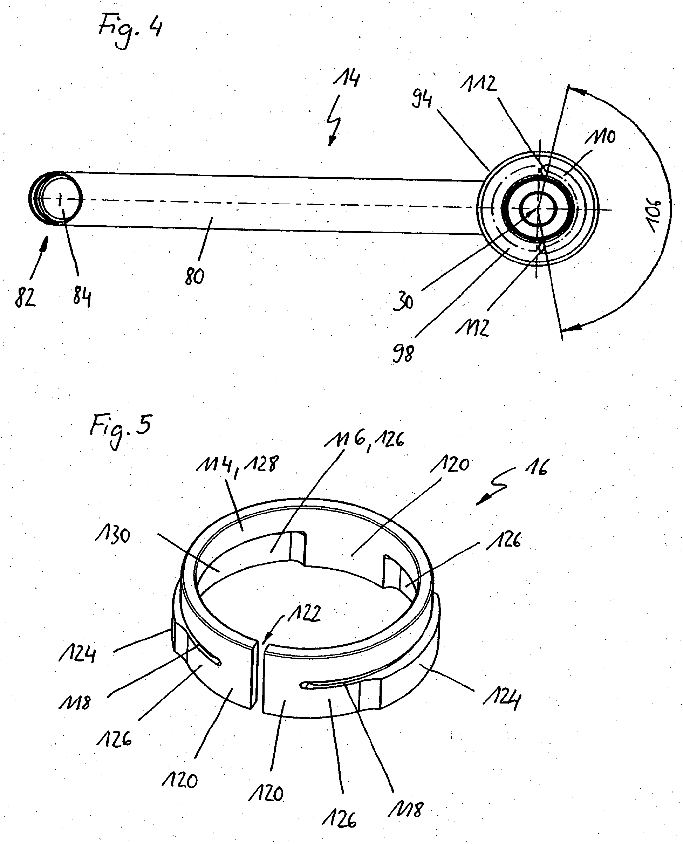

Zur Begrenzung eines Schwenkbereichs 106 ist ein Anschlagkörper 108 in Form eines Stifts 108 von der Oberseite 56 des Grundkörperflanschs 38 her im Grundkörperflansch 38 eingesetzt. Wie insbesondere aus Fig. 4 ersichtlich ist, ist vom Nutgrund der Innennut 98 des Armaturenteilflansches 94 her in Achsrichtung eine kreisbogenförmige Bahn 110 in den Armaturenteilflansch 94 hineingeformt. Die Bahn 110 verläuft beinahe 180° konzentrisch um die Achse 30 und ist durch je einen umfangsseitigen Bahnendbereich 112 begrenzt. Der Stift 108 greift in die Bahn 110 ein und wirkt mit den Bahnendbereichen 112 derart zusammen, dass der Schwenkbereich 106 des Armaturenteils 14 gegenüber dem Grundkörper 12 auf die etwa 180° begrenzt wird.

Die in den Fig. 5 bis 7 gezeigte Führungsklammer 16 ist derart gestaltet, dass sie mehrere Funktionen wahrnehmen kann. Einerseits kann sie die radiale Führung des hülsenförmigen Abschnitts 70 des Armaturenteils 14 im Grundkörper 12 sicherstellen, als auch gleichzeitig als Sicherung dienen, um ein Herausziehen des Armaturenteils 14 aus dem Grundkörper 12, beispielsweise bei einem Vandalenakt, zuverlässig und mit einfachen Mitteln zu verhindern. Trotzdem kann die erfindungsgemässe Führungsklammer 16 sowohl eine einfache Montage, als auch eine einfache Demontage des Armaturenteils 14 am Grundkörper 12 nicht nur ermöglichen, sondern begünstigten.

Die Führungsklammer 16 weist einen ersten und einen zweiten ringartigen Klammerabschnitt 114, bzw. 116 auf, welche in Richtung der Achse 30 hintereinander angeordnet sind und durch zwei in Umfangsrichtung verlaufende radiale Schlitze 118 partiell voneinander getrennt und lediglich durch Stege 120 miteinander verbunden sind, wobei die Stege 120 in Umfangsrichtung zwischen den radialen Schlitzen 118 angeordnet sind.

Wie in den Fig. 2, 5 und 7 ersichtlich ist, weist der erste (obere) Klammerabschnitt 114 im wesentlichen eine Kreisringzylinderform mit einer im wesentlichen konstanten Wandstärke auf.

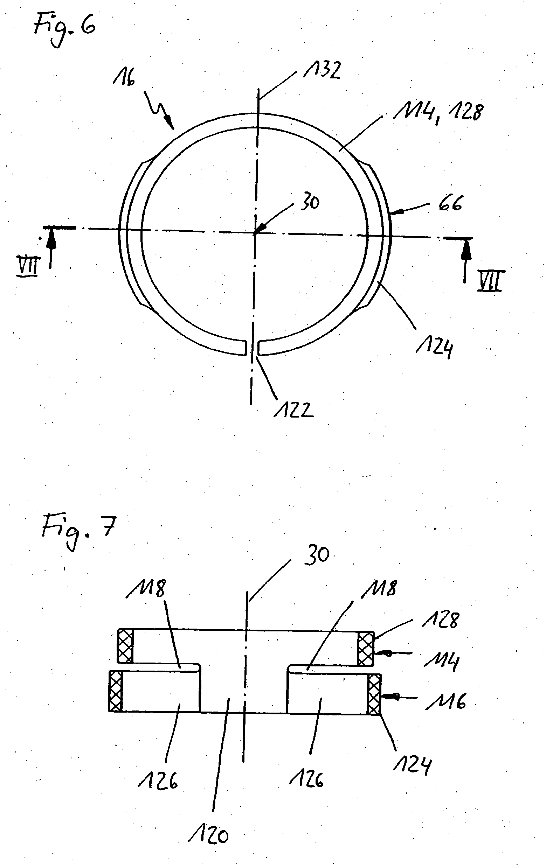

Aus den Fig. 5 und 6 ist ersichtlich, dass beide Klammerabschnitte 114,116 durch eine in Achsrichtung verlaufende, radial zur Achse 30 ausgerichtete Trennfuge 122 einmal unterbrochen sind. Die Trennfuge 122 ist im Bereich eines Steges 120 angeordnet und dient dazu, die Führungsklammer 16 unter Ausnutzung ihrer Federeigenschaften radial aufweiten zu können, um sie über den hülsenförmigen Abschnitt 70 des Armaturenteils 14 in die Ringnut 88 schieben zu können (siehe Fig. 2). Nach dem radialen Aufweiten federt die Führungsklammer 16 selbsttätig wenigstens annähernd in ihre vorherige Form zurück.

Der zweite (untere) Klammerabschnitt 116 weist bei den zwei radialen Schlitzen 118 je einen Rastabschnitt 124 auf, welcher bezüglich des radialen Schlitzes 118 in Umfangsrichtung etwa mittig angeordnet ist und sich in Umfangsrichtung etwa über zwei Drittel der Schlitzlänge des radialen Schlitzes 118 erstreckt. In Umfangsrichtung ist jeder Rastabschnitt 124 über ein lamellenartiges Federelement 126 mit einem Steg 120 und damit mit dem ersten Klammerabschnitt 114 verbunden, wobei sich das Federelement 126 im Bereich des radialen Schlitzes 118 befindet.

Ein Führungsabschnitt 128 der Führungsklammer 16 wird durch die Stege 120 und den ersten Klammerabschnitt 114 mit einer im wesentlichen konstanten Wandstärke gebildet.

Während die Rastabschnitte 124 den Führungsabschnitt 128 radial nach Aussen überragen, fluchten die lamellenartigen Federelemente 126 und die Stege 120 mantelseitig mit dem ersten, oben liegenden Klammerabschnitt 114. Radial innenseitig fluchten lediglich die Stege 120 mit dem ersten Klammerabschnitt 114, während die Federelemente 126 und die Rastabschnitte 124 durch eine Ausnehmung 130 innenkonturmässig vom ersten Klammerabschnitt 114 radial nach Aussen abgesetzt sind, wodurch die Wandstärke des Federelements 126 noch ungefähr die Hälfte der Wandstärke des Führungsabschnitts 128 beträgt und die Wandstärke des Rastabschnitts 124 etwa zwei Drittel derjenigen des Führungsabschnitts 128 beträgt, wie Fig. 7 zeigt. Durch die wandstärkenmässig verjüngten Federelemente 126 werden die Federeigenschaften der Rastabschnitte 124 und vor allem der Federelemente 126 in radialer Richtung zusätzlich zu den materialbedingten Eigenschaften der Führungsklammer 16 verbessert, wodurch der Rastabschnitt 124 mittels einer rein radial wirkenden Querkraft elastisch radial nach Innen wegdrängbar ist.

Wie Fig. 5 illustriert, weist die Führungsklammer 16 insgesamt drei Stege 120 auf, wobei der Steg 120, welcher diametral der Trennfuge 122 gegenüber liegt, annähernd doppelt so breit wie die zwei Stege 120 ausgeführt ist, welche beidseitig der Trennfuge 122 angeordnet sind.

Wie aus Fig. 6 hervorgeht, ist die Führungsklammer 16 bezüglich einer Ebene 132 der Trennfuge 122 spiegelsymmetrisch aufgebaut. Der Maximaldurchmesser 66 der Führungsklammer 16 misst sich diagonal über die beiden Rastabschnitte 124 der Führungsklammer 16 in Grundstellung quer zur Ebene 132.

Durch den oben genannten Aufbau weisen die Rastabschnitte 124 der Führungsklammer 16 einerseits eine hohe Steifigkeit in axialer Richtung und andererseits eine hohe Federfähigkeit in radialer Richtung auf.

Im montierten Zustand (siehe Fig. 2) ist der Durchlass 28 durch den ersten (oberen) Klammerabschnitt 114 mit Ausnahme der Trennfuge 122 umfangsseitig flächig geführt, während der hülsenförmige Abschnitt 70 des Armaturenteils 14 durch den ganzen Führungsabschnitt 128 - das heisst mit Ausnahme der Trennfuge 122 - innenseitig flächig am Nutgrund der umlaufenden Quernut 88 geführt ist.

Die einstückige Führungsklammer 16 ist vorzugsweise aus Kunststoff spritzgegossen, wobei als Kunststoff bevorzugt Polyamid gewählt ist. Es ist aber durchaus denkbar, auch andere Materialien, beispielsweise Polyoxyethylen (POM) einzusetzen, sofern sie die erforderlichen Gleiteigenschaften und/oder Federeigenschaften erfüllen, wobei elastomere Wirkstoffe dafür bevorzugt sind.

In diesem Zusammenhang ist es möglich, die Wandstärke im Bereich der Federelemente 126 in Abhängigkeit des gewählten Materials für die Führungsklammer 16 zu definieren, wodurch die Querkraft, welche notwendig ist, um die Rastabschnitte 124 radial nach Innen zu drängen, einstellbar ist.

Wie insbesondere aus Fig. 2 hervorgeht, ragen die Rastabschnitte 124 der Führungsklammer 16 derart radial nach Aussen über den Führungsabschnitt 128, dass sie axial mit der Gegenschulter 34 und der in Fig.2 unten liegenden Nutflanke 90 der Ringnut 88 so zusammen wirken, dass ein Herausziehen des Armaturenteils 14 aus dem Grundkörper 12 verhindert ist. Der Grundkörper 12 ist dadurch zwischen dem Armaturteilflansch 94 und den Rastabschnitten 124 axial fixiert.

Bei der Montage des Armaturenteils 14 am Grundkörper 12 wird wie folgt vorgegangen. Die Führungsklammer 16 wird derart in die Ringnut 88 eingesetzt, dass sich die Rastabschnitte 124 auf der Seite des freien Endbereichs 86 des hülsenförmigen Abschnitts 70 befinden. Ein spezieller Montageschritt zum Ausrichten der Führungsklammer 16 bezüglich ihrer Drehlage zur Achse 30 ist nicht notwendig, da die Führungsklammer 16 ihre Funktionen unabhängig von ihrer Drehlage bezüglich des Grundkörpers 12 erfüllen kann. Dann wird der hülsenförmige Abschnitt 70 in den Einführungsbereich 62 des Durchlasses 28 des Grundkörpers 12 eingeführt. Während der Innenzylinderabschnitt 64 lediglich zur Vorzentrierung dient, werden die Rastabschnitte 124 an der Komprimierflanke 68 des Grundkörpers 12 in radialer Richtung zur Achse 30 hin nach Innen geschoben. Dadurch, dass die Wandstärke der Rastabschnitte 124 kleiner oder gleich der Wandstärke des Führungsabschnitts 128 ist, wird ein Einführen des Armaturenteils 14 in den Durchlass 28 erleichtert. Der Armaturenteil 14 wird weiter in Richtung der Gegenschulter 34 geschoben, bis der Armaturenteilflansch 94 den Grundkörperflansch 38 umfasst und axial an diesem, beziehungsweise dem Lagerring 60 anliegt. In dieser Stellung federn die Rastabschnitte 124 der Führungsklammer 16 selbsttätig radial nach Aussen und wirken mit der Gegenschulter 34 und der unteren Nutflanke 90 der Ringnut 88 in der oben erklärten Weise zusammen.

Im vorliegenden Fall ist die Ringnut 88 axial derart dimensioniert, dass sich der Armaturenteil 14 mühelos im stationären Grundkörper 12 um die Achse 30 drehen lässt, eine nennenswerte axiale Verschiebung aber nicht zulässt und ein Herausziehen in axialer Richtung verhindert. Beim Versuch, den Armaturenteil 14 aus dem Grundkörper 12 zu ziehen, werden die Rastabschnitte 124 der Führungsklammer 16 zwischen der der Gegenschulter 34 zugewandten Nutflanke 90 der Ringnut 88 und der Gegenschulter 34 axial zusammengepresst. Da die der Gegenschulter 34 zugewandte Nutflanke 90 der Ringnut 88 und die Gegenschulter 34 im wesentlichen rechtwinklig zur Achse 30 verlaufen, entsteht beim Versuch, den hülsenförmigen Abschnitt 70 aus dem Grundkörper 12 herauszuziehen keine Querkraft, welche die Rastabschnitte 124 in radialer Richtung bewegen kann. Somit hat die Gegenschulter 34 auf das Zurückdrängen der Rastabschnitte 124 radial nach Innen keinen Einfluss, wenn der Armaturenteil 14 montiert ist.

Die axiale Ausdehnung der Rastabschnitte 124 kann entsprechend der Festigkeit des Materials der Führungsklammer 16 gewählt werden.

Dadurch, dass die Rastabschnitte 124 gleichzeitig als Endschlag wirken, ist ein separater Endanschlag in axialer Richtung zur Achse 30 überflüssig.

In der oben beschriebenen Ausführungsform der Sanitärarmatur 10 der vorliegenden Erfindung wird durch die räumliche axiale Trennung des Lagerrings 60 und der Führungsklammer 16 ein Zweipunktlager für den Armaturenteil 14 gebildet; was sich positiv auf die Stabilität desselben auswirken dürfte.

Zur Demontage des Armaturenteils 14 aus dem Grundkörper 12 werden die radial über die Gegenschulter 34 des Grundkörpers 12 vorstehenden Rastabschnitte 124 zuerst mittels eines Werkzeuges oder vorzugsweise von Hand zusammengedrückt, worauf diese radial zur Achse 30 nach Innen in die Ringnut 88 zurückgedrängt werden, und dann wird der Armaturenteil 14 aus dem Grundkörper 12 gezogen.

Es ist vorstellbar, dass die Gegenschulter 34 im Grandkörper 12 versenkt ist. Bei einer derartigen Ausführungsform würde der Durchlass 28 dann bei der Gegenschulter 34 enden.

Denkbar ist auch, dass die Führungsklammer 16 nur ein oder aber mehr als die zwei beschriebenen Rastabschnitte 124 aufweist.

Ebenfalls denkbar ist, dass der Führungsabschnitt 128 derart geformt ist, dass er den Armaturenteil 14 im Grundkörper 12 statt flächig mantelseitig und/oder innenseitig lediglich punktuell führt, beispielsweise um die Gleitreibung zu verringern.

Die Trennfuge 122 kann eine beliebige Form haben, solange die Montierbarkeit und die Funktion der Führungsklammer 16 auf dem hülsenförmigen Abschnitt 70 gewährleistet ist.

Es ist auch möglich, dass die Führungsklammer 16 nicht durch eine Trennfuge 122 geschlitzt ist, wenn der hülsenförmige Abschnitt 70 entsprechend mehrteilig ist.

Zudem ist es denkbar, dass der, bzw. die Stege 120 des Führungsabschnitts 128 wandstärkenmässig derart verjüngt sind, dass die radiale Führung des hülsenförmigen Abschnitts 70 ausschliesslich durch den ersten Klammerabschnitt 114 erfolgt.

Zu alledem wäre es denkbar, die Führungsklammer 16 am hülsenförmigen Abschnitt 70 des Armaturenteils 14 zu integrieren. Dabei wäre es möglich, den freien Endbereich 86 des hülsenförmigen Abschnitts 70 als Führungsabschnitt 128 zur Führung im Durchlass 28 des Grundkörpers 12 entsprechend zu gestalten. Analog der oben erfolgten Beschreibung wäre der Rastabschnitt 124 durch einen in Umfangsrichtung verlaufenden radialen Schlitz 118 vom Führungsabschnitt 128 getrennt und trotzdem mit diesem verbunden. Bei dieser Ausführungsform könnte auf die Trennfuge 122 verzichtet werden, da eine Vormontage der Führungsklammer 16 in die Quernut 88 des hülsenförmigen Abschnitts 70 entfällt. So könnte die Teileanzahl weiter vermindert, die Montageschritte weiter reduziert und die Montage des Armaturenteils 14 im Grundkörper 12 weiter vereinfacht werden.

Wenn die Nutflanken 90, 90' der Quernut, bzw. Ringnut 88, insbesondere die der Gegenschulter 34 des Grundkörpers 12 zugewandte Nutflanke 90 des hülsenförmigen Abschnitts 70 nicht rechtwinklig zur Achse 30, sondern in einem Winkel zu dieser geneigt ist, welcher derart bemessen ist, dass mit einem entsprechend angepassten Rastabschnitt 124 trotzdem ein selbsthemmender Effekt entsteht, könnte eine solche Ausführungsform ebenfalls verwendet werden.

Selbstverständlich ist es auch möglich, auf die Innengewinde 104 im Armaturenteil 14 zu verzichten und statt dessen ein anderes Anschlussmittel 104, beispielsweise eine Steckkupplung vorzusehen.

Zudem ist es auch denkbar, den Armaturenteilkörper 76 und den hülsenförmigen Abschnitt 70 zusammen, d.h. weinstückig herzustellen. Ebenso ist es denkbar, den ganzen Armaturenteil 14, zumindest im Durchführungsbereich 18, einstückig herzustellen.

Der Armaturenteil 14 kann beispielsweise ein Schwenkäuslauf oder ein Armaturengehäuse sein.

Der Schwenkbereich 106 kann sich beispielsweise auch über 120° oder über 300° erstrecken. In diesem Fall kann die Bahn 110 im Armaturenteilflansch 94 entsprechend länger oder kürzer sein. Es ist auch denkbar, den Schwenkbereich 106 mittels eines weiteren stiftförmigen Anschlagkörpers 108', welcher mit dem oben genannten stiftförmigen Anschlagkörper 108 auf einem gemeinsamen Teilkreis angeordnet ist, zu begrenzen. Ebenso ist es denkbar, dass der Anschlagkörper 108 direkt am Grundkörperflansch 94 angeformt ist, wodurch die Teileanzahl weiter reduziert werden könnte.

Zudem ist es auch denkbar, den Anschlagkörper 108 und die Bahn 106 oder ein anders Begrenzungsmittel zur Begrenzung des Schwenkbereichs 106 umfangsseitig zwischen dem Armaturenteilflansch 94 und dem Grundkörperflansch 38 anzuordnen, wodurch die Bauhöhe von der Anlagefläche 50 zur Oberseite 96 des Armaturenteilflansches 94 reduziert werden könnte.

Darüber hinaus ist es vorstellbar, dass der Lagerring 60 nur zur radialen oder nur zur axialen Lagerung des Armaturenteilflansches 94 am Grundkörperflansch 38 benutzt ist und er, so wie die ihm zugeordnete Aussparung 58 für den Lagerring 60 daher eine entsprechend andere Form aufweisen können.

Unter gegebenen Umständen, beispielsweise bei einem Armaturenteil 14, welcher nicht um die Achse 30 geschwenkt werden soll, ist es durchaus vorstellbar, ganz oder teilweise auf den zwischen dem Armaturenteilflansch 94 und dem Grundkörperflansch 38 angeordneten Lagerring 60 zu verzichten.

Obwohl es sich bei der beschriebenen Ausführungsform der Sanitärarmatur 10 um eine sogenannte Schwenkarmatur handelt, deren Teile im Durchführungsbereich 18 in Fig. 2 zusammenfassend illustriert sind, ist es vorstellbar, dass derselbe Aufbau auch für einen nicht-schwenkbaren Armaturenteil 14 benutzt werden kann. In diesem Fall könnte eine Verdrehsicherung beispielsweise über einen Zylinderstift oder eine Schraube vorgenommen werden, welche den Armaturenteilflansch 94 am Gründkörperflansch 38 fixiert.

## Patentansprüche

1. Sanitärarmatur mit einem Grundkörper (12), der dazu bestimmt ist, an einem Objekt (20) befestigt zu werden, und einen eine Achse (30) definierenden Durchlass (28) aufweist, einem Armaturenteil (14) mit einem hülsenförmigen, mantelseitig eine Quernut (88) aufweisenden Abschnitt (70), welcher den Durchlass (28) durchgreifend im Grundkörper (12) gelagert ist, und einer koaxial zur Achse (30) angeordneten, ringartigen, einteiligen Führungsklammer (16) mit einem Führungsabschnitt (128) zur Lagerung des Armaturenteils (14) im Grundkörper (12) und einem Rastabschnitt (124), wobei die Quernut (88) mantelseitig in einem freien Endbereich (86) des hülsenförmigen Abschnitts (70) angeordnet und die Führungsklammer (16) in dieser Quernut (88) fixiert ist, **dadurch gekennzeichnet, dass** die Führungsklammer (16) zwischen dem Führungsabschnitt (128) und dem Rastabschnitt (124) einen in Umfangsrichtung verlaufenden radialen Schlitz (118) aufweist, der Rastabschnitt (124) den im Durchlass (28) angeordneten Führungsabschnitt (128) radial nach Aussen überragt und dabei mit einer am Grundkörper (12) ausgebildeten Gegenschulter (34) zusammenwirkt, um das Herausziehen des Armaturenteils (14) aus dem Grundkörper (12) zu verhindern.

2. Sanitärarmatur nach Anspruch 1, **dadurch gekennzeichnet, dass** der Rastabschnitt (124) elastisch radial nach Innen zurückdrängbar ist, wobei die Gegenschulter (34) des Grundkörpers (12) bezüglich des Zurückdrängens wirkungsfrei ist.

3. Sanitärarmatur nach Anspruch 1 oder 2, **dadurch gekennzeichnet, dass** die Quernut (88) umlaufend ist und die Führungsklammer (16) in axialer Richtung durch eine Trennfuge (122) geschlitzt ist.

4. Sanitärarmatur nach einem der Ansprüche 1 bis 3, **dadurch gekennzeichnet, dass** der Durchlass (28) in einem von der Gegenschulter (34) beabstandeten Abschnitt eine umlaufende, vorzugsweise konische Komprimierflanke (68) aufweist, welche in Richtung zur Gegenschulter (34) hin verjüngt ist und dazu dient, ein Einführen des hülsenförmigen Abschnitts (70) mit der in der Quernut (88) angeordneten Führungsklammer (16) in den Durchlass (28) zu erleichtern und den Rastabschnitt (124) radial nach Innen zurückzudrängen.

5. Sanitärarmatur nach Anspruch 4, **dadurch gekennzeichnet, dass** der Grundkörper (12), vorzugsweise bei der Komprimierflanke (68), einen radial nach Aussen vorstehenden Grundkörperflansch (38) mit einer Anlagefläche (50) aufweist, welche dazu bestimmt ist, dem Objekt (20) zugewandt zu sein, und ein Armaturenteilflansch (94) des Armaturenteils (14) den Grundkörperflansch (38) wenigstens annähernd bis zur Anlagefläche (50) abdeckt.

6. Sanitärarmatur nach Anspruch 5, **dadurch gekennzeichnet, dass** zwischen dem Grundkörperflansch (38) und dem Armaturenteilflansch (94) ein axial und/oder radial wirkender Lagerring (60) angeordnet ist.

7. Sanitärarmatur nach einem der Ansprüche 1 bis 6, **dadurch gekennzeichnet, dass** der hülsenförmige Abschnitt (70) fest mit einem Auslaufrohr (80) verbunden und um die Achse (30) schwenkbar im Grundkörper (12) gelagert ist.

8. Sanitärarmatur nach Anspruch 7, **dadurch gekennzeichnet, dass** der Grundkörper (12) einen Anschlagkörper (108) aufweist, welcher in eine Bahn (110) des Armaturenteils (14) eingreift, um einen Schwenkbereich (106) des Armaturenteils (14) zu begrenzen.

9. Sanitärarmatur nach einem der Ansprüche 1 bis 8, **dadurch gekennzeichnet, dass** der Armaturenteil (14) mindestens ein Anschlussmittel (104), vorzugsweise ein Innengewinde, zum Anschliessen einer Zuflussleitung aufweist.

10. Sanitärarmatur nach einem der Ansprüche 1 bis 9, **dadurch gekennzeichnet, dass** der Rastabschnitt (124) in Umfangsrichtung über ein lamellenartiges Federelement (126) mit dem Führungsabschnitt (128) verbunden ist, wobei das Federelement (126) gegenüber dem Rastabschnitt (124) und dem Führungsabschnitt (128) wandstärkenmässig verjüngt ist.

11. Sanitärarmatur nach einem der Ansprüche 1 bis 10, **dadurch gekennzeichnet, dass** die Wandstärke des Rastabschnitts (124) kleiner oder gleich der Wandstärke des Führungsabschnitts (128) ist.

12. Sanitärarmatur nach einem der Ansprüche 1 bis 11, **dadurch gekennzeichnet, dass** die Führungsklammer (16) aus Kunststoff gefertigt ist.

## Claims

1. Sanitary fitting comprising a basic element (12) which is designed to be fastened to an object (20) and has a passage (28) defining an axis (30), a fitting part (14) having a sleeve-shaped portion (70) which has a transverse groove (88) on the casing side and which, reaching through the passage (28), is mounted in the basic element (12), and an annular, one-part guide clamp (16) disposed coaxially to the axis (30) and having a guide portion (128) for the mounting of the fitting part (14) in the basic element (12), and a latching portion (124), wherein the transverse groove (88) is disposed on the casing side in a free end region (86) of the sleeve-shaped portion (70) and the guide clamp (16) is fixed in this transverse groove (88), **characterized in that** the guide clamp (16) has between the guide portion (128) and the latching portion (124) a radial slot (118) running in the peripheral direction, the latching portion (124) protrudes radially outwards over the guide portion (128) disposed in the passage (28) and thereby cooperates with a mating shoulder (34) configured on the basic element (12) in order to prevent the fitting part (14) from being pulled out of the basic element (12).

2. Sanitary fitting according to claim 1, **characterized in that** the latching portion (124) can be forced back elastically radially inwards, the mating shoulder (34) of the basic element (12) being ineffectual with respect to the forcing back.

3. Sanitary fitting according to claim 1 or 2, **characterized in that** the transverse groove (88) is circumferential and the guide clamp (16) is slit in the axial direction by an interstice (122).

4. Sanitary fitting according to any one of claims 1 to 3, **characterized in that** the passage (28), in a portion distant from the mating shoulder (34), has a circumferential, preferably conical compressing flank (68), which is tapered in the direction of the mating shoulder (34) and serves to make it easier for the sleeve-shaped portion (70), with the guide clamp (16) disposed in the transverse groove (88), to be introduced into the passage (28) and to force back the latching portion (124) radially inwards.

5. Sanitary fitting according to claim 4, **characterized in that** the basic element (12), preferably next to the compressing flank (68), has a radially outwards projecting basic element flange (38) having a bearing surface (50) which is designed to be facing the object (20), and a fitting part flange (94) of the fitting part (14) covers the basic element flange (38) at least approximately up to the bearing surface (50).

6. Sanitary fitting according to claim 5, **characterized in that** between the basic element flange (38) and the fitting part flange (94) there is disposed an axially and/or radially acting bearing ring (60).

7. Sanitary fitting according to any one of claims 1 to 6, **characterized in that** the sleeve-shaped portion (70) is fixedly connected to a discharge pipe (80) and is mounted in the basic element (12) pivotably about the axis (30).

8. Sanitary fitting according to claim 7, **characterized in that** the basic element (12) has a stop body (108), which engages in a track (110) of the fitting part (14) in order to limit a swivel range (106) of the fitting part (14).

9. Sanitary fitting according to any one of claims 1 to 8, **characterized in that** the fitting part (14) has at least one connecting means (104), preferably an internal thread, for the connection of an inflow pipe.

10. Sanitary fitting according to any one of claims 1 to 9, **characterized in that** the latching portion (124), in the peripheral direction, is connected by a lamellar spring element (126) to the guide portion (128), the spring element (126) being tapered in terms of its wall thickness relative to the latching portion (124) and the guide portion (128).

11. Sanitary fitting according to any one of claims 1 to 10, **characterized in that** the wall thickness of the latching portion (124) is less than or equal to the wall thickness of the guide portion (128).

12. Sanitary fitting according to any one of claims 1 to 11, **characterized in that** the guide clamp (16) is made of plastic.

## Revendications

1. Robinetterie sanitaire comprenant un élément de base (12) qui est prévu pour être fixé à un objet (20) et qui présente un passage (28) définissant un axe (30), une partie de robinetterie (14) avec une portion en forme de douille (70) qui présente une rainure transversale (88) au niveau de son enveloppe, traverse le passage (28) et est montée dans l'élément de base (12), et une pince de guidage (16) annulaire en une partie disposée coaxialement par rapport à l'axe (30) avec une portion de guidage (128) pour le positionnement de la partie de robinetterie (14) dans l'élément de base (12) et une portion d'encliquetage (124), la rainure transversale (88) étant disposée au niveau de son enveloppe dans une zone d'extrémité libre (86) de la portion en forme de douille (70) et la pince de guidage (16) étant fixée dans cette rainure transversale (88), **caractérisée en ce que** la pince de guidage (16) présente entre la portion de guidage (128) et la portion d'encliquetage (124) une fente radiale (118) s'étendant dans la direction circonférentielle, la portion d'encliquetage (124) dépasse radialement vers l'extérieur la portion de guidage (128) disposée dans le passage (28) et ce faisant coopère avec un contre-épaulement (34) formé sur l'élément de base (12) pour empêcher l'arrachement de la partie de robinetterie (14) hors de l'élément de base (12).

2. Robinetterie sanitaire selon la revendication 1, **caractérisée en ce que** la portion d'encliquetage (124) est rétractable élastiquement radialement vers l'intérieur, le contre-épaulement (34) de l'élément de base (12) étant sans influence en ce qui concerne la rétraction.

3. Robinetterie sanitaire selon la revendication 1 ou 2, **caractérisée en ce que** la rainure transversale (88) est circonférentielle et la pince de guidage (16) est ouverte dans la direction axiale par un joint de séparation (122).

4. Robinetterie sanitaire selon l'une des revendications 1 à 3, **caractérisée en ce que** le passage (28) présente dans une portion distante du contre-épaulement (34) un flanc de compression (68) circonférentiel préférablement conique qui se rétrécit dans la direction du contre-épaulement (34) et qui sert à faciliter une introduction dans le passage (28) de la portion en forme de douille (70) avec la pince de guidage (16) disposée dans la rainure transversale (88) et à rétracter la portion d'encliquetage (124) radialement vers l'intérieur.

5. Robinetterie sanitaire selon la revendication 4, **caractérisée en ce que** l'élément de base (12), préférablement près du flanc de compression (68), présente une bride d'élément de base (38) saillant radialement vers l'extérieur avec une surface d'appui (50) prévue pour être orientée vers l'objet (20), et une bride de partie de robinetterie (94) de la partie de robinetterie (14) couvre la bride d'élément de base (38) au moins approximativement jusqu'à la surface d'appui (50).

6. Robinetterie sanitaire selon la revendication 5, **caractérisée en ce qu'**une bague de palier (60) agissant axialement et/ou radialement est disposée entre la bride d'élément de base (38) et la bride de partie de robinetterie (94).

7. Robinetterie sanitaire selon l'une des revendications 1 à 6, **caractérisée en ce que** la portion en forme de douille (70) est connectée de façon fixe à un tuyau d'évacuation (80) et est montée dans l'élément de base (12) de façon pivotable autour de l'axe (30).

8. Robinetterie sanitaire selon la revendication 7, **caractérisée en ce que** l'élément de base (12) présente un corps de butée (108) qui s'engage dans un chemin (110) de la partie de robinetterie (14) de façon à limiter une zone de pivotement (106) de la partie de robinetterie (14).

9. Robinetterie sanitaire selon l'une des revendications 1 à 8, **caractérisée en ce que** la partie de robinetterie (14) présente au moins un moyen de connexion (104), préférablement un taraudage, pour la connexion d'un tuyau d'amenée.

10. Robinetterie sanitaire selon l'une des revendications 1 à 9, **caractérisée en ce que** la portion d'encliquetage (124), dans la direction circonférentielle, est connectée par un élément de ressort lamellaire (126) à la portion de guidage (128), l'élément de ressort (126) étant rétréci en ce qui concerne l'épaisseur de paroi par rapport à la portion d'encliquetage (124) et à la portion de guidage (128).

11. Robinetterie sanitaire selon l'une des revendications 1 à 10, **caractérisée en ce que** l'épaisseur de paroi de la portion d'encliquetage (124) est plus petite ou égale que l'épaisseur de paroi de la portion de guidage (128).

12. Robinetterie sanitaire selon l'une des revendications 1 à 11, **caractérisée en ce que** la pince de guidage (16) est faite en plastique.
